# EUROPEAN PATENT SPECIFICATION

(11) **EP 0 622 499 B1**
(45) Date of publication and mention of the grant of the patent: **25.11.1998**
(21) Application number: 94610023.7
(22) Date of filing: 28.04.1994
(51) Int. Cl.: E04B 1/38, E06B 3/60, F16B 2/24

(54) **A fastening device**
Befestigungsvorrichtung
Dispositif de fixation

(30) Priority: 30.04.1993 DK 49493
(43) Date of publication of application: 02.11.1994
(73) Proprietor: VELUX Industri A/S, 2860 Soborg (DK)
(72) Inventor: Martinsen, Mogens Borge Gunnar, DK-2730 Herlev (DE)
(74) Representative: Raffnsöe, Knud Rosenstand

(56) References cited:
- EP-A- 0 262 282
- FR-A- 2 275 674
- FR-A- 2 571 448
- FR-A- 2 669 202

## Description

The invention relates to a fastening device comprising a spring clip device comprising a foot part with an upright part extending obliquely upwards in relation to and in over the foot part, wherein at a distance from the foot part, a catching fin extends obliquely downwards from the upright part to the same side as the foot part.

A fastening device of this type is known from EP-A-0 262 282 which relates to a clamp suitable to secure two panels together to form a picture holder and apt to have a frame applied to it. The clamp is shown in different embodiments mounted in undercut grooves in frame elements.

The invention also relates to an assembly comprising the fastening device of the invention.

The assembly of this type is known from the publication EP-A-0 221 766 relates to spring clips of various types for retention of plates which constitute the sides of a lining for a window. Fig. 9 of said publication shows a spring clip, and Fig. 8 shows how the clip is fastened by means of a screw on a slightly bevelled side wall in a groove in a wooden frame. When the plate is pressed into the groove, the catching fin of the spring clip will give way until the plate has reached the bottom of the groove. The tip of the catching fin will be pressed against the plate owing to the spring power and, depending on the quality of the plate, will cut slightly into it so that an outward pull in the plate will cause the tip to penetrate further into the plate and in this manner increase its power of retention so that the plate becomes more difficult to pull out of the groove.

However, the hardness of the plates used may vary so that either the tips of the fins cannot get a good grip on the plate, or the plate is not firm enough to resist the load normally originating from the weight of the lining. Therefore, the lining is also retained by means of screw fittings known *per se*, which are positioned on the outside of the lining.

The object of the present invention is to provide a fastening device and an assembly as mentioned above, whereby the fastening of a plate in a groove by means of spring clip devices is simplified in relation to known art.

This object is achieved by means of a fastening device of the type mentioned above, which is characterized in that the foot part is provided with barbs extending outwardly and upwardly at at least one of its sides.

The object is further achieved by means of an assembly comprising a building component, such as a window frame, a flashing slat, etc., a plate and a fastening device according to the invention for the plate, one side edge of which is inserted in a groove in the building component, wherein the width of the groove is substantially larger than the thickness of the plate, and wherein one side surface of the plate abuts one side wall of the groove, the spring clip device of the fastening device pressing against the other side surface of the plate and preventing movement of the plate in a direction out of the groove by means of the catching fin engaging with the other side surface of the plate, the foot part of the spring clip device having a width substantially corresponding to the width of the groove at its bottom, the barbs at at least one of its sides, being adapted for penetrating into the side wall of the groove.

In a first embodiment, the upright part extends from one side of the foot part. This results in a spring clip device in the form of a single member which is able to retain itself in the groove and at the same time engage the plate and retain it.

In a further embodiment, the plate comprises a slot for receiving the catching fin. The result of this is that the grip of the spring clip in the plate is ensured, independently of the quality of the plate, and the use of extra screw fittings as security is avoided.

The side edge of the plate may be rounded at at least the side which is intended to abut the side wall of the groove. This facilitates the insertion of the side edge of the plate into the groove. The fastening device may further comprise a soft sealing strip laid down into the groove beneath the side edge of the plate. This is certain to prevent draughts through the joint.

In another embodiment, the spring clip device comprises parts at the two sides of the foot part which are adapted to abut the side surfaces of the plate to fix the foot part in its direction of width in relation to the side edge of the plate. In a further embodiment, the spring clip device comprises two separate members, of which the first member comprises the foot part provided with barbs, and the second member comprises the catching fin and a secondary foot part with the parts adapted for abutment against the side surfaces of the plate, wherein the first member comprises a fin extending from one side of the foot part across the foot part substantially in parallel with it and past the other side of the foot part, and wherein the secondary foot part is adapted to receive and retain said fin when the second member has been arranged on the side edge of the plate. This provides an embodiment which is suitable when the plate and the member comprising the groove are mutually inclined at angles other than right angles to each other.

The secondary foot part may have an opening for insertion of the fin, and the fin may be provided with knobs for engagement with the rim of the opening.

The spring clip may be made of spring steel plate and have recesses to adjust its rigidity. The spring clip may also comprise a guide fin extending oppositely to the catching fin.

The invention will now be explained in further detail below with reference to the drawing, in which
Figs. 1a-1d show four different views of a spring clip according to the invention,
Figs. 2a and 2b show insertion of the spring clip in a groove,
Figs. 3a and 3b show two different views of a tool for use in the insertion,
Fig. 4 shows a section through a plate fastened in a groove by means of the spring clip,
Figs. 5a-5c show three different views of a second embodiment of a spring clip,
Figs. 6a and 6b show a spring clip member used in combination with the spring clip shown in Figs. 5a-5c,
Fig. 7 shows the use of the spring clip of Figs. 5a-5c,
Fig. 8 shows the use of the spring clip member of Figs. 6a and 6b in combination with the spring clip of Figs. 5a-5c, and
Figs. 9a and 9b show views corresponding to those of Figs. 5a and 5b of a variety of the spring clip depicted there.

The spring clip shown in Figs. la-ld and designated 10 in its entirety comprises a foot part 1 with barbs 2 at its sides. From one side of the foot part 1, an upright part 3 extends obliquely upwards and across the foot part, and at its far end in relation to the foot part 1, the upright part carries a catching fin 4 which extends obliquely downwards towards the foot part 1. A guide fin 5 extends oppositely to the catching fin 4 and in extension thereof. The spring clip may suitably be made of corrosion-resistant spring steel plate. In the embodiment shown, the foot part 1 and the upright part 3 comprise openings 6 to adjust the rigidity of the spring clip 10.

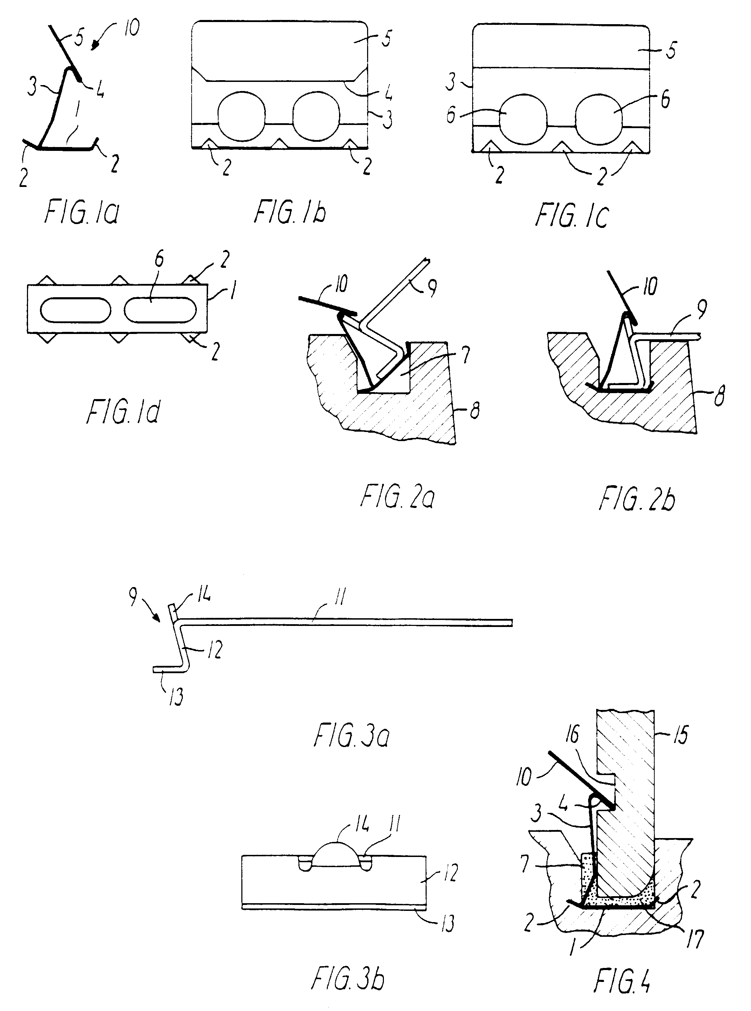

Fig. 2a shows how the spring clip 10 is twisted down into a groove 7, for example in a wooden frame 8 of a window. As can be seen, the spring clip 10 is inserted in such a manner that the barbs 2 of the foot part 1 at one side are brought into abutment with one side wall of the groove 7 at the bottom, whereupon the spring clip 10 is turned or pressed down into the groove 7 by means of a tool 9 so that the foot part 1 of the spring clip 10 abuts the bottom of the groove 7, and the barbs 2 are pressed into the side walls of the groove 7.

The tool 9 is shown in detail in Figs. 3a and 3b and comprises a handle part 11, a carrier part 12 connecting the handle part 11 with a supporting part 13 which rests on the foot part of the spring clip 10 during use. Additionally, the tool has a gripping part 14 which is adapted to grip below the catching fin 4 during use, as shown in Figs. 2a and 2b.

Fig. 4 shows a plate 15 mounted in the groove 7 by means of a spring clip 10. The catching fin 4 of the spring clip 10 engages with a slot 16 in the plate to ensure a good grip. A sealing strip 17 of a compressible material of a type known *per se* has been inserted between the plate 15 and the bottom of the groove 7.

When the plate 15 was mounted in the groove 7, spring clips 10 were first arranged at suitable mutual distances in the groove 7. Then the sealing strip 17 was laid down into the groove 7, and finally the plate 15 was pressed down into the groove. At this last operation, the guide fins 5 of the spring clips 10 acted as guides for the plate 15. As it appears from Fig. 4, one end of the plate 15 is rounded to facilitate its insertion in the groove 7. Apart from its guiding function at the insertion of the plate 15 in the groove 7, the guide fin 5 may be used for withdrawal of the catching fin 4 for dismantling of the plate 15.

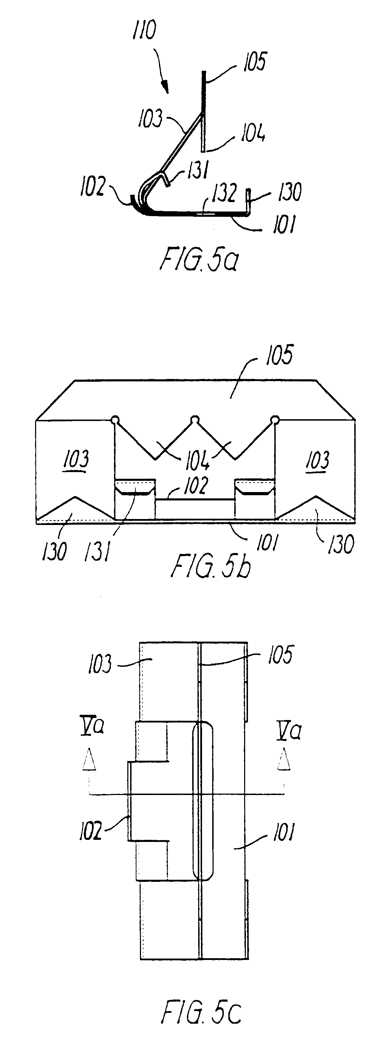

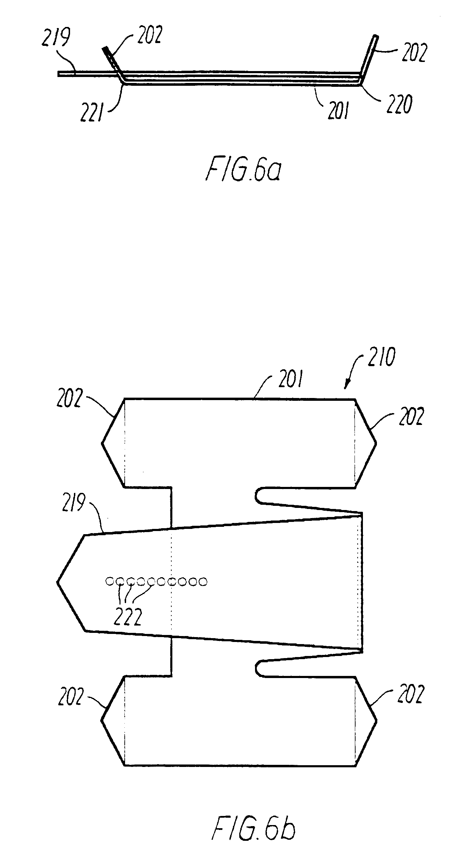

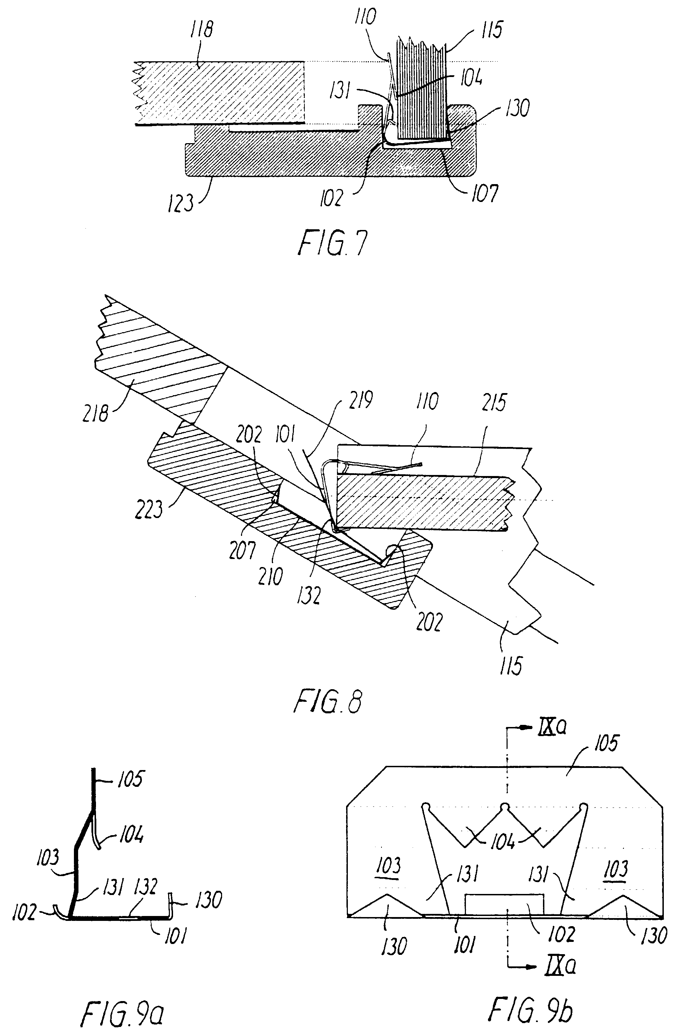

Figs. 5a-5c show a second embodiment of a spring clip 110 which may be used partly as an independent member, partly in combination with the spring clip member 210 shown in Figs. 6a and 6b. The spring clip 110 comprises a foot part 101 having a barb 102, an upright part 103, catching fins 104, which are pointed in this case, and a guide fin 105. Additionally, the spring clip 110 has abutment parts 130 and 131 intended to abut the side surfaces of a plate to be fastened by means of the spring clip 110, as it also appears from Figs. 7 and 8. The abutment part 130 forms an angle with the foot part 101 of slightly less than 90°, preferably of 85-88°, to ensure abutment against the plate.

Figs. 9a and 9b show a variety of the spring clip 110, in which the abutment parts 131 are integral with the upright part 103.

Fig. 7 shows an independent use of the spring clip 110 for mounting a lining slat 123 on the side edge of a plate 115 which might at its opposite side edge, not shown, be mounted in a window frame by means of the spring clip shown in Figs. la-ld. In the case shown, the lining slat 123 closes an opening between the plate 115 and an oblique wall 118. The plate 115 extends into a groove 107 in the lining slat 123, the spring clip 110 is retained on the plate 115 by means of the catching fins 104 and the abutment parts 130 and 131, while the barb 102 retains the spring clip 110 in the groove 107. In the case shown, one side wall thereof inclines inwards to make room for the abutment part 130 at the same time as the upper edge of the groove 107 abuts the side surface of the plate 115.

Figs. 6a and 6b show a spring clip member 210 comprising a foot part 201 with barbs 202. From one side 220 of the foot part 201, a fin 219 extends across and in parallel with the foot part 201 and past its second side 221. The fin 219 is provided with impressions forming a number of knobs 222 facing the foot part 201. The spring clip member 210 is adapted to cooperate with the spring clip 110, which is therefore provided with an elongated opening 132 in its foot part 101. Fig. 8 shows the use of the two spring clip members 110 and 210 in combination for mounting of a lining slat 223 on the side edge of a plate 215 to close a hole between this plate and an oblique wall 218 in a case where the plate 215 and the oblique wall 218 form an obtuse angle, and not a substantially right angle as is the case in Fig. 7.

The plates 115 and 215 could be side plates and top or bottom plates, respectively, in a lining of a window, extending between a skylight, not shown, and the interior oblique wall 118, 218.

In Fig. 8, the spring clip 110 is shown fastened to the side edge of the plate 215 in the same manner as it is fastened to the plate 115 in Fig. 7. The spring clip member 210 is pressed down into a groove 207 in the lining slat 223 and is retained there by its barbs 202. The fin 219 has been inserted between the plate 215 and the foot part 101 of the spring clip member 110 and out through the opening 132. The knobs 222 engage with the rim of the opening 132 and prevent the two spring clip members 110, 210 from becoming mutually displaced. Thus, the lining slat 223 is fastened to the plate 215.

The spring clip 110 could be adapted to receive and retain the fin 219 in other manners than by means of the opening 132. For example, the barb 102 could have an opening allowing the fin 219 to extend across the foot part 101 instead of out through the opening 132. Furthermore, the material from the foot part 101 which has been cut away to provide the opening 132 could have been retained as an integral part of the spring clip 110. Thus this material could have remained integral with the foot part 101 at the ends of the opening 132 to form a kind of bracket below the foot part 101 so that the fin 219 could be inserted between this bracket and the foot part 101.

With the spring clip device shown in Fig. 8 and consisting of two spring clip members 110, 210, a fastening device is obtained which may adjust to a wide range of obtuse angles between the plate 215 and the oblique wall 218.

## Claims

1. A fastening device comprising a spring clip device (10, 110, 210) comprising a foot part (1, 101, 201) with an upright part (3, 103) extending obliquely upwards in relation to and in over the foot part (1, 101, 201), wherein at a distance from the foot part (1, 101, 201), a catching fin (4, 104) extends obliquely downwards from the upright part (3, 103) to the same side as the foot part (1, 101, 201), **characterized** in that the foot part (1, 101, 201) is provided with barbs (2, 102, 202) extending outwardly and upwardly at at least one of its sides.

2. A fastening device according to claim 1, **characterized** in that the upright part (3, 103) extends from one side of the foot part (1, 101).

3. A fastening device according to claim 1-2, **characterized** in that a guide fin (5) extends oppositely to the catching fin (4).

4. A fastening device according to claim 1, **characterized** in that at the two sides of the foot part (101), the spring clip device (110) comprises parts (130, 131), which are adapted to abut the side surfaces of a plate (115, 215) to fix the foot part (101) in its direction of width in relation to the side edge of the plate.

5. A fastening device according to claim 4, **characterized** in that the spring clip device comprises two separate members (110, 210), of which the first member (210) comprises the foot part (201) provided with barbs (202), and the second member (110) comprises the catching fin (104) and a secondary foot part (101) with the parts (130, 131) adapted for abutment against the side surfaces of the plate (215), that the first member (210) comprises a fin (219) extending from one side (220) of the foot part (201) across the foot part (201) substantially in parallel with it and past the other side (221) of the foot part (201), and that the secondary foot part (101) is adapted to receive and retain said fin (219) when the second member (110) has been arranged on the side edge of a plate (215).

6. A fastening device according to claim 5, **characterized** in that the secondary foot part (101) comprises an opening (132) for insertion of the fin (219), and that the fin (219) is provided with knobs (222) for engagement with the rim of the opening (132).

7. A fastening device according to claims 1-6, **characterized** in that the spring clip device (10) is made of spring steel plate and comprises recesses (6) to adjust its rigidity.

8. An assembly comprising a building component, such as a window frame, a flashing slat, etc., a plate (15, 115, 215) and a fastening device, according to any of claims 1 to 7, for the plate (15, 115, 215), one side edge of which is inserted in a groove (7, 107, 207) in the building component, wherein the width of the groove is substantially larger than the thickness of the plate (15, 115, 215), and wherein one side surface of the plate (15, 115, 215) abuts one side wall of the groove (7, 107, 207), the spring clip device (10, 110, 210) of the fastening device pressing against the other side surface of the plate (15, 115, 215) and preventing movement of the plate (15, 115, 215) in a direction out of the groove (7, 107, 207) by means of the catching fin (4, 104) engaging with the other side surface of the plate (15, 15, 215), the foot part (1, 101, 201) of the spring clip device having a width substantially corresponding to the width of the groove (7, 107, 207) at its bottom , the barbs (2, 102, 202) at at least one of its sides, being adapted for penetrating into the side wall of the groove (7, 107, 207).

9. An assembly according to claim 8, **characterized** in that the plate (15) comprises a slot (16) for receiving the catching fin (4).

10. An assembly according to claims 8 or 9, **characterized** in that the side edge of the plate (15) is rounded at the side surface intended to abut the side wall of the groove (7).

11. An assembly according to claims 8-10, **characterized** in comprising a soft sealing strip (17) laid down into the groove (7) beneath the side edge of the plate (15).

## Patentansprüche

1. Befestigungsvorrichtung umfassend eine Federklammeranordnung (10, 110, 210) mit einem Fussstück (1, 101, 201) mit einem aufrechtstehenden Teil (3, 10), der im Verhältnis zum Fussstück schräg nach oben und über das Fussstück (1, 101, 201) verläuft, wobei sich in einem Abstand vom Fussstück (1, 101, 201) von dem aufrechtstehenden Teil (3,103) schräg nach unten auf dieselbe Seite wie das Fussstück (1, 101, 201) ein Greifflansch (4, 104) erstreckt, dadurch **gekennzeichnet**, dass das Fussstück (1, 101, 201) zumindest an dessen einer Seite mit nach aussen und nach oben ragenden Widerhaken (2, 102, 202) versehen ist.

2. Befestigungsvorrichtung nach Anspruch 1, dadurch **gekennzeichnet,** dass sich der aufrechtstehende Teil (3, 103) von der einen Seite des Fussstückes (1, 101) erstreckt.

3. Befestigungsvorrichtung nach Anspruch 1-2, dadurch **gekennzeichnet,** dass sich gegenüber dem Greifflansch (4) ein Steuerflansch (5) erstreckt.

4. Befestigungsvorrichtung nach Anspruch 1, dadurch **gekennzeichnet,** dass auf beiden Seiten des Fussstückes (101) die Federklammeranordnung (110) Teile (130, 131) aufweist, die zur Anlage an den Seiten einer Platte (115, 215) vorgesehen sind, um das Fussstück (101) in Richtung dessen Breite im Verhältnis zur Seitenkante der Platte zu fixieren.

5. Befestigungsvorrichtung nach Anspruch 4, dadurch **gekennzeichnet,** dass die Federklammeranordnung zwei separate Elemente (110, 210) umfasst, von welchen das erste Element (210) aus dem mit Widerhaken (202) versehenen Fussstück besteht, und das zweite Element (110) aus dem Greifflansch (104) und einem zweiten Fussstück (101) mit jenen Teilen (130, 131) besteht, die zur Anlage gegen die Seitenflächen der Platte (215) vorgesehen sind, dass das erste Element (210) einen auf einer Seite (220) des Fussstückes (210) über das Fussstück (201) im wesentlichen parallel mit diesem und hinter die andere Seite (221) des Fussstückes (201) verlaufenden Flansch (219) aufweist, und dass das zweite Fussstück (201) dazu vorgesehen ist erwähnten Flansch (219) aufzunehmen und festzuhalten, wenn das zweite Element (110) auf der Seitenkante einer Platte (215) angeordnet ist.

6. Befestigungsvorrichtung nach Anspruch 5, dadurch **gekennzeichnet,** dass das zweite Fussstück (101) eine Öffnung (132) zum Einsetzen des Flansches (219) umfasst, und dass der Flansch (219) mit Noppen (222) zum Eingriff mit dem Rand der Öffnung (132) ausgestattet ist.

7. Befestigungsvorrichtung nach Anspruch 1-6, dadurch **gekennzeichnet,** dass die Federklammervorrichtung (10) aus Federstahl hergestellt ist und Aussparungen (6) zum Justieren deren Steifheit umfasst.

8. Montagegruppe umfassend ein Bauelement, wie etwa einen Fensterrahmen, eine Einfassungsleiste usw., eine Platte (15, 115, 215) und eine Befestigungsvorrichtung nach einem der Ansprüche 1-7, wobei die eine Seitenkante der Platte (15, 115, 215) in eine Nut (7, 107, 207) im Bauelement eingesetzt ist, und die Breite der Nut wesentlich grösser ist als die Dicke der Platte (15, 115, 215), und wo die eine Seitenfläche der Platte (15, 115, 215) an der einen Seitenwand der Nut (7, 107, 207) anliegt, und die Federklammeranordnung (10, 110, 210) der Befestigungsvorrichtung gegen die andere Seitenfläche der Platte (15, 115, 215) presst mittels des in die andere Seitenfläche der Platte (15, 115, 215) eingreifenden Greifflansches (4, 104) und eine Bewegung der Platte (15, 115, 215) in einer Richtung aus der Nut (7, 107, 207) heraus hindert, wobei das Fussstück (1, 101, 201) der Federklammeranordnung eine Breite aufweist, die im wesentlichen der Breite der Nut (7, 107, 207) an ihrem Boden entspricht, und die Widerhaken (2, 102, 202) zumindest an einer deren Seiten dazu vorgesehen sind in die Seitenwand der Nut (7, 107, 207) einzudringen.

9. Montagegruppe nach Anspruch 8, dadurch **gekennzeichnet**, dass die Platte (15) einen Spalt (16) zur Aufnahme des Greifflansches (4) umfasst.

10. Montagegruppe nach Anspruch 8 oder 9, dadurch **gekennzeichnet,** dass die zum Anliegen an der Seitenwand der Nut (7) vorgesehene Seitenkante der Platte (15) abgerundet ist.

11. Montagegruppe nach Anspruch 8-10, dadurch **gekennzeichnet,** dass sie einen in die Nut (7) unter der Seitenkante der Platte (15) eingebettete weichen Dichtungsstreifen (17) umfasst.

## Revendications

1. Dispositif de fixation comprenant un clip-ressort (10, 110, 210) présentant un pied (1, 101, 210) avec une partie relevée (3, 103) qui s'étend obliquement vers le haut par rapport au pied (1, 101, 201) et au dessus de celui-ci, et dans lequel, à distance du pied (1, 101, 201), une languette de retenue (4, 104) s'étend obliquement vers le bas à partir de la partie relevée (3, 103) et vers le pied (1, 101, 201), **caractérisé** en ce que le pied (1, 101, 201), sur au moins un de ses bords, est pourvu de barbillons (2, 102, 202) qui s'étendent vers l'extérieur et vers le haut.

2. Dispositif de fixation selon la revendication 1, **caractérisé** en ce que la partie relevée (3, 103) s'étend à partir d'un bord du pied (1, 101).

3. Dispositif de fixation selon les revendications 1 et 2, **caractérisé** en ce qu'une languette de guidage (5) s'étend en direction opposée à la languette de retenue (4).

4. Dispositif de fixation selon la revendication 1, caractérise en ce que sur les deux bords du pied (101), le clip-ressort (110) présente des parties (130, 131) conçues pour venir en appui contre les faces latérales d'une plaque (115, 215) pour fixer le pied (101) dans le sens de sa largeur par rapport au rebord de la plaque.

5. Dispositif de fixation selon la revendication 4, **caractérisé** en ce que le clip-ressort comprend deux pièces séparées (110, 210), dont la première pièce (210) comprend le pied (201) pourvu de barbillons (202), et la seconde pièce (110) comprend la languette de retenue (104) et un pied secondaire (101) avec les parties (130, 131) conçues pour venir en appui contre les faces latérales de la plaque (215), en ce que la première pièce (210) comporte une languette (219) qui à partir d'un bord (200) du pied (201) s'étend sur le pied (201), essentiellement parallèlement à celui-ci, et au-delà de l'autre bord (221) du pied (201), et en ce que le pied secondaire (101) est conçu pour loger et retenir ladite languette (219) lorsque la seconde pièce (110) a été mise en place sur le bord latéral d'une plaque (215).

6. Dispositif de fixation selon la revendication 5, , **caractérisé** en ce que le pied secondaire (101) comporte une ouverture (132) pour insertion de la languette (219), et en ce que la languette (219) est pourvue de saillies (222) destinées à venir en prise avec le bord de l'ouverture (132).

7. Dispositif de fixation selon les revendications 1 à 6, **caractérisé** en ce que le clip-ressort (10) est constitué à partir d'une feuille d'acier à ressort et comporte des échancrures (6) d'ajustement de sa rigidité.

8. Assemblage comprenant un élément de construction tel que par exemple un cadre de fenêtre, une latte de garniture, etc., une plaque (15, 115, 215) et un dispositif de fixation, selon l'une quelconque des revendications 1 à 7, de la plaque (15, 115, 215), dont un bord latéral est inséré dans une feuillure (7, 107, 207) de l'élément de construction, dans lequel la largeur de la feuillure est sensiblement plus grande que l'épaisseur de la plaque (15, 115, 215), et dans lequel une face latérale de la plaque (15, 115, 215) est en appui contre une paroi latérale de la feuillure (7, 107, 207), le clip-ressort (10, 110, 210) du dispositif de fixation appuyant contre l'autre face latérale de la plaque (15, 115, 215) et empêchant un mouvement de la plaque (15, 115, 215), en direction hors de la feuillure (7, 107, 207), à l'aide de la languette de retenue (4, 104) en prise avec l'autre face latérale de la plaque (15, 115, 215), le pied (1, 101, 201) du clip-ressort présentant une largeur qui correspond essentiellement à la largeur de la feuillure (7, 107, 207) au fond de celle-ci, les barbillons (2, 102, 202) sur au moins un des bords du pied étant conçus pour pénétrer dans la paroi latérale de la feuillure (7, 107, 207).

9. Assemblage selon la revendication 8, **caractérisé** en ce que la plaque (15) comporte une rainure (16) de logement de la languette de retenue (4).

10. Assemblage selon les revendications 8 ou 9, **caractérisé** en ce que le bord latéral de la plaque (15) est arrondi sur la face latérale prévue pour venir en appui contre la paroi latérale de la feuillure (7).

11. Assemblage selon les revendications 8 à 10, **caractérisé** en ce qu'il comporte une bande de garniture souple (17) disposée dans la feuillure (7) en dessous du bord latéral de la plaque (15).
